# EUROPEAN PATENT APPLICATION

(11) **EP 4 672 381 A1**
(43) Date of publication of application: **31.12.2025**
(21) Application number: 24883740.3
(22) Date of filing: 27.02.2024
(51) Int. Cl.: H01M 4/62, H01M 4/36, H01M 4/525

(54) **POSITIVE ELECTRODE MATERIAL, PREPARATION METHOD THEREFOR, LITHIUM-ION BATTERY AND ELECTRIC DEVICE**

(30) Priority: 01.11.2023 CN 202311439210
(71) Applicant: Contemporary Amperex Technology Co., Limited, Ningde, Fujian 352100 (CN)
(72) Inventor: WU, Kai, Ningde, Fujian 352100 (CN); YAN, Guanfusheng, Ningde, Fujian 352100 (CN); JIN, Chao, Ningde, Fujian 352100 (CN); YE, Yonghuang, Ningde, Fujian 352100 (CN); ZHENG, Shibing, Ningde, Fujian 352100 (CN); ZHONG, Ming, Ningde, Fujian 352100 (CN); WU, Zirui, Ningde, Fujian 352100 (CN); ZHANG, Xin, Ningde, Fujian 352100 (CN); DAI, Zhipeng, Ningde, Fujian 352100 (CN)
(74) Representative: Ziebig Hengelhaupt Intellectual Property Attorneys Patentanwaltskanzlei PartGmbB
(86) International application number: PCT/CN2024/078714
(87) International publication number: WO 2025/091723

(57) **Abstract**

A positive electrode material. The positive electrode material has the following chemical formula: LiₐNiₓCo_{y}Mn_{1-x-y}M_{b}O_{2-c}Q_{c}, wherein 0.2≤a≤1.2, x≥0.6, y>0, b>0, c>0, M comprises a high-valence cation, and Q comprises an anion. By doping a high-valence cation and an anion in a nickel-rich ternary positive electrode material, the bulk structure of the nickel-rich ternary positive electrode material under lithium deintercalation is stabilized, side reactions, lattice oxygen evolution and transition metal dissolution are reduced, and the cycling stability, the high-temperature storage performance and the rate capability are improved. In addition, the outer surface of the positive electrode material can be further coated with a selenium-containing substance coating layer (2), a selenium-containing substance in the selenium-containing substance coating layer (2) can react with residual lithium compounds on the surface of the positive electrode material, and the remaining selenium-containing substances can be combined with lattice oxygen released in a high-delithiation state to prevent an electrolyte solution from being oxidized. Moreover, a conductive substance coating layer (3) can be further prepared on the outer surface of the selenium-containing substance coating layer (2), thereby preventing direct contact between the selenium-containing substance and the electrolyte solution, and inhibiting side reactions.

## Description

### CROSS-REFERENCE TO RELATED APPLICATIONS

The present application claims priority to Chinese Patent Application No. 202311439210.6 filed on November 01, 2023, which is incorporated herein by reference in its entirety.

### TECHNICAL FIELD

The present application relates to the field of battery positive electrode materials, and in particular, to a positive electrode material, a preparation method therefor, a lithium-ion battery and an electric device.

### BACKGROUND

Lithium-ion batteries (LIBs) have attracted much attention due to their long lifetime, high energy density and low maintenance cost. At present, LIBs have been widely used in electric vehicles, portable electronic equipments, energy storage systems and other fields.

However, the performance of LIBs such as energy density, safety and service life cannot fully meet various requirements at present, and positive electrode materials are an important factor to make a breakthrough. Also, ternary positive electrode materials have become an industrialization hotspot in recent years due to high reversible capacity, low cost and other advantages, and researchers usually increase the energy density of LIBs by continuously increasing their nickel content.

However, as the nickel content in the ternary positive electrode materials increases, a series of problems will arise. On one hand, the increase of the nickel content will lead to a decrease in the thermal stability of the materials. In a high SOC delithiation state, the lattice releases oxygen, internal cracks expand, and an electrolyte solution easily enters the interior of the particles to cause side reactions, and meanwhile, transition metal dissolution occurs, resulting in the deterioration of the life and safety performance. On the other hand, the increase of the nickel content will cause the materials to produce surface residual lithium compounds (RLCs) and have poor interface stability, which could bring a series of side effects, including first effect, deterioration of cycling, storage performance, etc. Considering the various adverse effects of RLCs on the surface of the above ternary positive electrode materials, it is necessary to remove surface RLCs and inhibit their subsequent formation. Therefore, the existing nickel-rich ternary positive electrode materials still need to be improved.

### SUMMARY

The present application is made in view of the above problem, and an objective thereof is to provide a positive electrode material, a preparation method therefor, a lithium-ion battery and an electric device.

A first aspect of the present application provides a positive electrode material, the positive electrode material having the following chemical formula: LiₐNiₓCo_{y}Mn_{1-x-y}M_{b}O_{2-c}Q_{c}, wherein 0.2≤a≤1.2, x≥0.6, y>0, b>0, c>0, M comprises a high-valence cation, Q comprises an anion, the high-valence cation comprises a tetravalent or higher cation, and the anion comprises at least one of S²⁻, Se²⁻, Te²⁻ and P³⁻. A high-valence cation doped into a nickel-rich positive electrode material can affect the crystal growth direction of the positive electrode material and thus lead to grain refinement, eliminate harmful stresses caused by H2-H3 phase transition lattice contraction through fracture toughening, and can eliminate local compositional inhomogeneity of the material. In addition, the doped high-valence cation can also play a pillar effect to stabilize the stability of a delithiation structure. A doped anion can replace an oxygen site, enhance a metal-oxygen bond, inhibit lattice oxygen evolution, and at the same time reduce an interaction force between a lithium layer and an oxygen layer to increase the spacing between the lithium layer and the oxygen layer, reduce the migration barrier of lithium ions, and accelerate the transmission of lithium ions. In the present application, by combining bulk phase doping of the high-valence cation and surface gradient doping of the anion, the bulk structure of the nickel-rich positive electrode material under lithium deintercalation and the interface stability with an electrolyte solution are stabilized, side reactions, lattice oxygen evolution and transition metal dissolution are reduced, and the cycling stability, the high-temperature storage performance and the rate capability are improved.

In some embodiments of the present application, the high-valence cation comprise at least one of Mo⁶⁺, Sb⁵⁺, Zr⁴⁺, Ti⁴⁺, Nb⁵⁺, W⁶⁺, Y⁵⁺ and Ta⁵⁺. The above types of high-valence cations can affect the crystal growth direction of the positive electrode material and thus lead to grain refinement, and eliminate harmful stresses caused by H2-H3 phase transition lattice contraction through fracture toughening, and can eliminate the problem of local compositional inhomogeneity of the material, and simultaneously can play a pillar effect to stabilize the stability of the delithiation structure.

The anion described in the present application comprises at least one of S²⁻, Se²⁻, Te²⁻ and P³⁻. The above types of anions can replace oxygen sites, enhance the binding forces of metal-oxygen bonds, inhibit lattice oxygen evolution, and simultaneously reduce the interaction force between the lithium layer and the oxygen layer to increase the spacing between the lithium layer and the oxygen layer, reduce the migration barrier of lithium ions, and accelerate the transmission of lithium ions. By combining bulk phase doping of the high-valence cation and surface gradient doping of the anion, the bulk structure of the nickel-rich positive electrode material under lithium deintercalation and the interface stability with an electrolyte solution are stabilized, side reactions, lattice oxygen evolution and transition metal dissolution are reduced, and the cycling stability, the high-temperature storage performance and the rate capability are improved.

In some embodiments of the present application, 0.0005≤b≤0.01, and/or 0.001≤c≤0.1. The doping amount of the high-valence cation and anion in the positive electrode material is within the above range, which is beneficial to stabilize the bulk structure of the nickel-rich positive electrode material under lithium deintercalation and the interface stability with an electrolyte solution, reduce side reactions, lattice oxygen evolution and transition metal dissolution, and improve the cycling stability, the high-temperature storage performance and the rate capability. It is not easy to fail to play the above role due to insufficient doping amount, nor is it easy to affect the capacity of a battery and lead to a decrease in the electrochemical performance of the battery due to excessive doping amount.

In some embodiments of the present application, an outer surface of the positive electrode material further comprises a first coating layer which comprises a selenium-containing substance. The selenium-containing substance can react with residual lithium compounds (RLCs) on the surface of the nickel-rich positive electrode material to form a CEI such as lithium selenoselenate (Li₂Se₂O₃) and lithium selenate (Li₂SeO₄) in situ, which increases the migration rate of lithium ions on the surface layer. Meanwhile, the remaining selenium-containing substances can be combined with lattice oxygen released in the high delithiation state to prevent an electrolyte solution from being oxidized to produce gas.

In some embodiments of the present application, the selenium-containing substance comprises at least one of elemental selenium (Se), selenium oxide (SeO₂), selenium sulfide (SeS₂) and tellurium selenide (TeSe). The above types of selenium-containing substances are easy to react with residual lithium compounds on the surface of the nickel-rich positive electrode material to form a CEI (an electrolytic interface) such as lithium selenoselenate and lithium selenate in situ.

In some embodiments of the present application, the content of selenium element in the positive electrode material containing the first coating layer is 0.03% to 5%. It should be noted that the content here refers to mass percentage content.

In some embodiments of the present application, based on 100% of the total mass of the positive electrode material, the addition amount of the selenium-containing substance ranges from 0.1% to 5%. The selenium-containing substance is within the above addition amount range, and it is not easy to fail to play a role in removing RLCs and lead to insignificant improvement of the performance of the positive electrode material due to insufficient addition amount, nor is it easy to reduce the proportion of an active material, reduce the battery capacity, and even cause the problem of excessive selenium-containing substance catalyzing the decomposition of an electrolyte solution solvent to produce gas due to excessive addition amount.

In some embodiments of the present application, based on 100% of the total mass of the positive electrode material, the addition amount of the selenium-containing substance ranges from 0.5% to 2%.

In some embodiments of the present application, the particle size Dv50 of the selenium-containing substance is 100 nm to 1000 nm. A selenium-containing substance with an excessively large particle size is not conducive to reaction with RLCs, and a large number of RLCs easily remain, while a nanosized selenium-containing substance has a larger specific surface area, which can increase the reaction contact area and form a dense selenium-containing substance coating layer.

In some embodiments of the present application, the particle size Dv50 of the selenium-containing substance is 100 nm to 500 nm.

In some embodiments of the present application, the positive electrode material further comprises a second coating layer which is coated on a surface of the first coating layer and comprises a conductive polymer. Since the selenium-containing substance easily catalyzes the decomposition of an electrolyte solution ester solvent to generate oxidizing gases, the conductive polymer of the second coating layer can isolate direct contact between the selenium-containing substance and the electrolyte solution and inhibit side reactions. Meanwhile, the excellent conductivity of the conductive polymer enhances the electronic conductivity of the material, reduces the interface impedance and improves the cycling performance of the battery.

In some embodiments of the present application, the conductive polymer comprises at least one of polyaniline, polypyrrole, polypyridine and polythiophene. The above types of conductive polymers are easy to react and form a coating layer, which is beneficial to prevent direct contact between the selenium-containing substance and the electrolyte solution and inhibit side reactions. Meanwhile, the above types of conductive polymers also have excellent conductivity, which can enhance the electronic conductivity of the positive electrode material, reduce the interface impedance and improve the cycling performance of the battery.

In some embodiments of the present application, the second coating layer has a thickness of 50 nm to 500 nm, and it is not easy to affect the lithium ion transmission effect of the battery due to excessive thickness, nor is it easy to fail to achieve the purpose of reducing side reactions by reducing the contact between the selenium-containing substance and the electrolyte solution due to the too excessive thinness.

In some embodiments of the present application, the thickness of the second coating layer is 50 nm to 200 nm.

A second aspect of the present application provides a preparation method for a positive electrode material having the above chemical formula LiₐNiₓCo_{y}Mn_{1-x-y}M₈O_{2-c}Q_{c}.

The preparation method for the positive electrode material comprises the following steps:
mixing a nickel-rich ternary positive electrode material precursor with a high-valence cation dopant, sintering same to obtain a high-valence cation-doped positive electrode material A, mixing the positive electrode material A with an anion dopant, sintering same to obtain the positive electrode material, and marking the positive electrode material as a positive electrode material C, wherein the positive electrode material C contains a high-valence cation and an anion, and the high-valence cation comprises a tetravalent or higher cation;
   or
the preparation method for the positive electrode material comprises the following steps:
   mixing a nickel-containing positive electrode material precursor with an anion dopant, sintering same to obtain an anion-doped positive electrode material B, mixing the positive electrode material B with a high-valence cation dopant, sintering same to obtain the positive electrode material, and marking the positive electrode material as a positive electrode material C, wherein the positive electrode material C contains a high-valence cation and an anion, and the high-valence cation comprises a tetravalent or higher cation.

In the present application, the positive electrode material C co-doped with the high-valence cation and the anion is obtained by first doping the high-valence cation and then doping the anion in the nickel-rich ternary positive electrode material, or first doping the anion and then doping the high-valence cation, and has better stability. It should be noted that, the purpose of mixing and sintering the high-valence cation dopant in the present application is to enable the finally prepared positive electrode material to carry the high-valence cation, while the purpose of mixing and sintering the anion dopant is to enable the finally prepared positive electrode material to carry the anion.

In some embodiments of the present application, in the step of preparing the positive electrode material A, the sintering comprises primary sintering and secondary sintering, the temperature of the primary sintering is 350°C to 500°C, the time of the primary sintering is 2 to 7h, the temperature of the secondary sintering is 600°C to 800°C, and the time of the secondary sintering is 3 to 6h.

In some embodiments of the present application, in the step of preparing the positive electrode material B, the sintering temperature is 400°C to 650°C.

A third aspect of the present application provides a preparation method for a positive electrode material, comprising the following steps:
mixing the positive electrode material C as described above in the present application with a selenium-containing substance, heating same to obtain a positive electrode material, and marking the positive electrode material as a positive electrode material D, wherein a surface of the positive electrode material D has a selenium-containing substance coating layer. The positive electrode material D prepared in this embodiment is the positive electrode material provided with the first coating layer on the outer surface as described above.

In some embodiments in the present application, the heating temperature is 230°C to 500°C;
and/or, the heating time is 15 min to 120 min.

A fourth aspect of the present application further provides a preparation method for a positive electrode material, comprising the following steps:
dissolving a conductive polymer in an organic solvent to obtain a conductive polymer solution, mixing and reacting the conductive polymer solution, an initiator and the positive electrode material D as described above in the present application, filtering, washing and drying same to obtain a positive electrode material, and marking the positive electrode material as a positive electrode material E, wherein a surface of the positive electrode material E has a conductive substance coating layer. The positive electrode material E prepared in the embodiment is the positive electrode material respectively provided with the first coating layer and the second coating layer on the outer surface as described above.

It should be noted that the above preparation method can be understood as preparing a conductive substance coating layer on the outer surface of the selenium-containing substance coating layer of the positive electrode material D, thereby forming the positive electrode material E which contains both the selenium-containing substance coating layer and the conductive substance coating layer.

In some embodiments of the present application, based on 100% of the total mass of the positive electrode material D, the addition amount of the conductive polymer is 0.5% to 10%, and it is not easy to affect the lithium ion transmission effect of the battery due to excessive addition amount, nor is it easy to fail to achieve the purpose of reducing side reactions by reducing the contact between the selenium-containing substance and the electrolyte solution due to insufficient addition amount.

A fifth aspect of the present application further provides a lithium-ion battery, the battery comprising the positive electrode material as described above in the present application, the battery comprising any one of a battery cell, a battery module and a battery pack.

The fifth aspect of the present application further provides an electric device, the electric device comprising the lithium-ion battery as described above in the present application.

The present application can achieve the following beneficial effects:
the present application provides a positive electrode material, which is co-doped with a high-valence cation and an anion, wherein the high-valence cation doped into the nickel-rich positive electrode material affects the crystal growth direction and thus leads to grain refinement, eliminates harmful stresses caused by H2-H3 phase transition lattice contraction through fracture toughening, and can eliminate local compositional inhomogeneity of the material. The doped high-valence cation can also play a pillar effect to stabilize the stability of the delithiation structure. The doped anion can replace an oxygen site, enhance a metal-oxygen bond, inhibit lattice oxygen evolution, and at the same time reduce an interaction force between a lithium layer and an oxygen layer to increase the spacing between the lithium layer and the oxygen layer, reduce the migration barrier of lithium ions, and accelerate the transmission of lithium ions. By combining bulk phase doping of the high-valence cation and surface gradient doping of the anion, the bulk structure of the nickel-rich positive electrode material under lithium deintercalation and the interface stability with an electrolyte solution are stabilized, side reactions, lattice oxygen evolution and transition metal dissolution are reduced, and the cycling stability, the high-temperature storage performance and the rate capability are improved.

In addition, the first coating layer which is the selenium-containing substance coating layer can be further prepared on the outer surface of the positive electrode material. The selenium-containing substance can undergo a redox reaction with residual lithium compounds (RLCs) on the surface of the nickel-rich positive electrode material to remove part of the RLCs and form a CEI (an electrolyte interface) such as lithium selenoselenate (Li₂Se₂O₃) and lithium selenate (Li₂SeO₄) in situ, which is beneficial to increase the migration rate of lithium ions on the surface layer. Meanwhile, the remaining selenium-containing substances can be combined with lattice oxygen released in the high delithiation state to prevent the electrolyte solution from being oxidized to produce gas, and the remaining RLCs can be further reacted and converted into active lithium for secondary use during the chemical formation process after a battery cell is manufactured.

Further, a second coating layer which is a conductive substance coating layer can be further prepared on the surface of the selenium-containing substance coating layer of the positive electrode material. The conductive substance coating layer can prevent direct contact between the selenium-containing substance and the electrolyte solution and inhibit side reactions. Meanwhile, the excellent conductivity of the conductive polymer can enhance the electronic conductivity of the positive electrode material, reduce the interface impedance, and improve the cycling performance of the battery.

### DESCRIPTION OF DRAWINGS

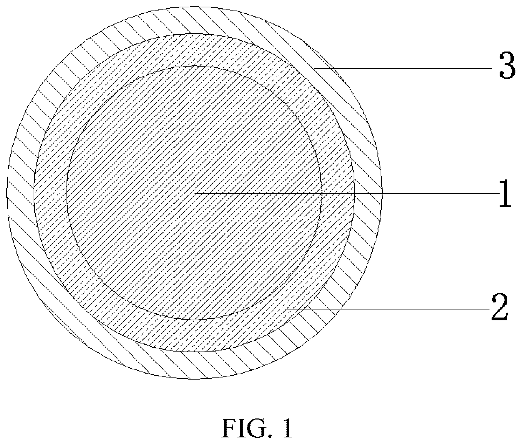

FIG. 1 is a schematic structural diagram of a positive electrode material according to an implementation of the present application.

### Description of reference signs:

1 active substance; 2 selenium-containing substance coating layer; 3 conductive substance coating layer.

Purpose implementation, functional features, and advantages of the present application are further described with reference to the embodiments and the accompanying drawings.

### DESCRIPTION OF EMBODIMENTS

An insulating thermal radiation paint and a preparation method therefor, an insulating thermal radiation coating and a preparation method therefor, a battery case, a battery and an electric device of the present application are described below in detail with appropriate reference to the drawing. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

As the nickel content in a positive electrode material increases, a series of problems will arise. On one hand, the increase of the nickel content will lead to a decrease in the thermal stability of the material. In a high SOC delithiation state, the lattice releases oxygen, internal cracks expand, and an electrolyte solution easily enters the interior of the particles to cause side reactions, and meanwhile, transition metal dissolution occurs, resulting in the deterioration of the life and safety performance.

In view of this, the present application provides a positive electrode material, the positive electrode material having the following chemical formula: LiₐNiₓCo_{y}Mn_{1-x-y}M_{b}O_{2-c}Q_{c}, wherein 0.2≤a≤1.2, x≥0.6, y>0, b>0, c>0, M comprises a high-valence cation, Q comprises an anion, the high-valence cation comprises a tetravalent or higher cation, and the anion comprises at least one of S²⁻, Se²⁻, Te²⁻ and P³⁻.

In some embodiments, the high-valence cation comprises at least one of Mo⁶⁺, Sb⁵⁺ Zr⁴⁺, Ti⁴⁺, Nb⁵⁺, W⁶⁺, Y⁵⁺ and Ta⁵⁺. The above types of high-valence cations can affect the crystal growth direction of the positive electrode material and thus lead to grain refinement, and eliminate harmful stresses caused by H₂-H₃ phase transition lattice contraction through fracture toughening, and can eliminate the problem of local compositional inhomogeneity of the material, and simultaneously can play a pillar effect to stabilize the stability of the delithiation structure.

The anion in the above positive electrode material of the present application comprises at least one of S²⁻, Se²⁻, Te²⁻ and P³⁻. The above types of anions can replace oxygen sites, enhance the binding forces of metal-oxygen bonds, inhibit lattice oxygen evolution, and simultaneously reduce the interaction force between the lithium layer and the oxygen layer to increase the spacing between the lithium layer and the oxygen layer, reduce the migration barrier of lithium ions, and accelerate the transmission of lithium ions. By combining bulk phase doping of the high-valence cation and surface gradient doping of the anion, the bulk structure of the nickel-rich positive electrode material under lithium deintercalation and the interface stability with the electrolyte solution are stabilized, side reactions, lattice oxygen evolution and transition metal dissolution are reduced, and the cycling stability, the high-temperature storage performance and the rate capability are improved.

In the present application, in the positive electrode material LiₐNiₓCo_{y}Mn_{1-x-y}M_{b}O_{2-c}Q_{c}, 0.2≤a≤1.2. For example, a may be any value in the range of 0.2 to 1.2, such as 0.2, 0.25, 0.28, 0.3, 0.32, 0.35, 0.4, 0.45, 0.5, 0.55, 0.6, 0.65, 0.7, 0.75, 0.8, 0.85, 0.9, 0.95, 1.0, 1.05, 1.1, 1.15, 1.18, 1.2, etc. It should be noted that the molar content range of lithium element in the above positive electrode material comprises the molar content of lithium element in a battery to which the positive electrode material is applied in different charge and discharge states.

In some embodiments, 0.0005≤b≤0.01, and/or 0.001≤c≤0.1 For example, b may be any value in the range of 0.0005 to 0.01, such as 0.0005, 0.0006, 0.0007, 0.0008, 0.0009, 0.001, 0.002, 0.003, 0.004, 0.005, 0.006, 0.007, 0.008, 0.009, 0.01, etc., and c may be any value in the range of 0.001 to 0.1, such as 0.001, 0.003, 0.005, 0.006, 0.008, 0.009, 0.01, 0.015, 0.02, 0.03, 0.04, 0.05, 0.055, 0.06, 0.07, 0.08, 0.085, 0.09, 0.095, 0.01, etc. The doping amount of the high-valence cations and anions in the positive electrode material is within the above range, which is beneficial to stabilize the body structure of the nickel-rich ternary positive electrode material under lithium deintercalation and the interface stability with an electrolyte solution, reduce side reactions, lattice oxygen evolution and transition metal dissolution, improve the cycling stability, the high-temperature storage performance and the rate capability, and it is not easy to make it difficult to play the above role due to too small doping amount, nor is it easy to affect the capacity of the battery due to too high doping amount, resulting in a decrease in the electrochemical performance of the battery.

On the other hand, with the increase of the nickel content, the materials will produce surface residual lithium compounds (RLCs) and poor interface stability, which will bring a series of side effects, including first effect, deterioration of cycling, storage performance, etc. Considering the various adverse effects of RLCs on the surface of the above ternary positive electrode materials, it is necessary to remove surface RLCs and inhibit their subsequent formation.

In view of this, in the present application, in the above positive electrode material doped with the anion and the high-valence cation, a first coating layer is further designed on an outer surface of the positive electrode material, and comprises a selenium-containing substance.

The selenium-containing substance can undergo a redox reaction with residual lithium compounds (RLCs) on the surface of the nickel-rich positive electrode material to remove part of the RLCs and form a CEI (an electrolyte interface) such as lithium selenoselenate (Li₂Se₂O₃) and lithium selenate (Li₂SeO₄) in situ, which is beneficial to increase the migration rate of lithium ions on the surface layer. Meanwhile, the remaining selenium-containing substances can be combined with lattice oxygen released in the high delithiation state to prevent the electrolyte solution from being oxidized to produce gas, and the remaining RLCs can be further reacted and converted into active lithium for secondary use during the chemical formation process after a battery cell is manufactured.

In some embodiments, the selenium-containing substance comprises at least one of elemental selenium (Se), selenium oxide (SeO₂), selenium sulfide (SeS₂) and tellurium selenide (TeSe). The above types of selenium-containing substances are easy to undergo redox reactions with residual lithium compounds (RLCs) on the surface of the nickel-rich positive electrode material to form a CEI such as lithium selenoselenate and lithium selenate in situ, removing part of the RLCs and preventing excessive RLCs content from affecting the interface stability of the lithium-ion battery, which could lead to a series of side effects such as first effect, deterioration of cycling and poor storage performance.

In the embodiment, the content of selenium element in the positive electrode material comprising the first coating layer ranges from 0.03% to 5%, for example, may be any value in the range of 0.03% to 5%, such as 0.03%, 0.04%, 0.05%, 0.06%, 0.07%, 0.08%, 0.09%, 0.1%, 0.2%, 0.3%, 0.5%, 0.8%, 0.9%, 1%, 1.05%, 1.1%, 1.2%, 1.3%, 1.5%, 1.8%, 1.9%, 1.91%, 1.95%, 2%, 2.2%, 2.3%, 2.5%, 2.6%, 2.7%, 2.76%, 2.8%, 2.9%, 3.%, 3.5%, 3.56%, 3.6%, 3.7%, 3.9%, 4%, 4.2%, 4.5%, 4.8%, 4.9%, 5%, etc.

In some embodiments, based on 100% of the total mass of the positive electrode material, the addition amount of the selenium-containing substance ranges from 0.1% to 5%, and further, may be 0.5% to 2%, for example, may be any value in the range of 0.1% to 5%, such as 0.1%, 0.3%, 0.4%, 0.5%, 0.8%, 1%, 1.2%, 1.5%, 1.8%, 2%, 2.2%, 2.5%, 2.6%, 2.9%, 3%, 3.3%, 3.5%, 3.8%, 3.9%, 4%, 4.2%, 4.4%, 4.6%, 4.8%, 4.9%, 5%, etc. It can be understood that the total mass of the positive electrode material described in this embodiment refers to the total mass of the positive electrode material having the above chemical formula LiₐNiₓCo_{y}Mn_{1-x-y}M_{b}O_{2-c}Q_{c}, that is, the positive electrode material on which the first coating layer has not yet been prepared.

The present application does not limit the particle size Dv50 of the selenium-containing substance. In some embodiments, the particle size Dv50 of the selenium-containing substance is 100 nm to 1000 nm, and may also be 100 nm to 500 nm. For example, the particle size Dv50 may be any value in the range of 100 nm to 1000 nm, such as 100 nm, 200 nm, 300 nm, 400 nm, 500 nm, 600 nm, 700 nm, 800 nm, 900 nm, 1000 nm, etc.

However, the selenium-containing substance is easy to catalyze the decomposition of an electrolyte solution ester solvent to generate oxidizing gases. In view of this, in some embodiments, the above positive electrode material containing the first coating layer further comprises a second coating layer which is coated on a surface of the first coating layer and comprises a conductive polymer.

The conductive polymer of the second coating layer can prevent direct contact between the selenium-containing substance and the electrolyte solution and inhibit side reactions. Meanwhile, the excellent conductivity of the conductive polymer enhances the electronic conductivity of the positive electrode material, reduces the interface impedance, and improves the cycling performance of the battery.

In some embodiments, the conductive polymer comprises at least one of polyaniline, polypyrrole, polypyridine and polythiophene. The above types of conductive polymers are easy to react to form a coating layer, which is beneficial to prevent direct contact between the selenium-containing substance and the electrolyte solution and inhibit side reactions. Meanwhile, the above types of conductive polymers also have excellent conductivity, which can enhance the electronic conductivity of the positive electrode material, reduce the interface impedance, and improve the cycling performance of the battery.

The present application does not limit the thickness of the second coating layer. In some embodiments, the thickness of the second coating layer is 50 nm to 500 nm, and may also be 50 nm to 200 nm. For example, the thickness of the second coating layer is any thickness value in the range of 50 nm to 500 nm, such as 50 nm, 80 nm, 100 nm, 120 nm, 150 nm, 80 nm, 100 nm, 120 nm, 150 nm, 180 nm, 200 nm, 250 nm, 300 nm, 350 nm, 400 nm, 420 nm, 450 nm, 480 nm, 490 nm, 500 nm, etc. The second coating layer within the above thickness range condition is not easy to affect the lithium ion transmission effect of the battery due to excessive thickness, nor is it easy to achieve the purpose of reducing side reactions by reducing the contact between the selenium-containing substance and the electrolyte solution due to excessive thinness.

A second aspect of the present application provides a preparation method for a positive electrode material having the above chemical formula LiₐNiₓCo_{y}Mn_{1-x-y}M_{b}O_{2-c}Q_{c}, the preparation method for the positive electrode material comprising the following steps:
mixing a nickel-rich ternary positive electrode material precursor with a high-valence cation dopant, sintering same to obtain a high-valence cation-doped positive electrode material A, mixing the positive electrode material A with an anion dopant, sintering same to obtain the above positive electrode material, and marking the positive electrode material as a positive electrode material C, wherein the positive electrode material C contains a high-valence cation and an anion, and the high-valence cation comprises a tetravalent or higher cation;
   or
the preparation method for the positive electrode material comprising the following steps:
   mixing a nickel-containing positive electrode material precursor with an anion dopant, sintering same to obtain an anion-doped positive electrode material B, mixing the positive electrode material B with a high-valence cation dopant, sintering same to obtain the above positive electrode material, and marking the positive electrode material as a positive electrode material C, wherein the positive electrode material C contains a high-valence cation and an anion, and the high-valence cation comprises a tetravalent or higher cation.

It should be noted that the positive electrode material C prepared by the preparation method has the chemical formula LiₐNiₓCo_{y}Mn_{1-x-y}M_{b}O_{2-c}Q_{c} described above in the present application, wherein 0.2≤a≤1.2, x≥0.6, y>0, b>0, c>0, M comprises a high-valence cation, Q comprises an anion, the high-valence cation comprises a tetravalent or higher cation, and the anion comprises at least one of S²⁻, Se²⁻, Te²⁻ and P³⁻.

It can be understood that, the purpose of mixing and sintering the high-valence cation dopant in the present application is to enable the finally prepared positive electrode material to carry the above high-valence cation, while the purpose of mixing and sintering the anion dopant is to enable the finally prepared positive electrode material to further carry the above anion. The present application does not limit the doping order of the high-valence cation and the anion. A high-valence cation dopant can be first doped into the nickel-rich ternary positive electrode material precursor to prepare the positive electrode material A, and then an anion is doped into the positive electrode material A to obtain the positive electrode material C co-doped with the high-valence cation and the anion. In addition, an anion dopant can also be added to the nickel-rich ternary positive electrode material precursor first to prepare the anion-doped positive electrode material B, and then a high-valence cation dopant is added to the positive electrode material B to prepare the positive electrode material C co-doped with the high-valence cation and the anion. The positive electrode materials C prepared by the above two preparation methods may be understood as the same type of positive electrode materials, that is, the positive electrode materials co-doped with the high-valence cation and the anion.

In some embodiments, a high-valence cation is first doped into a nickel-rich ternary positive electrode material precursor to prepare the positive electrode material A. In the process of preparing the positive electrode material A, the sintering process comprises primary sintering and secondary sintering. The temperature of the primary sintering is 350°C to 500°C, the time of the primary sintering is 2 to 7h, the temperature of the secondary sintering is 600°C to 800°C, and the time of the secondary sintering is 3h to 6h.

In some embodiments, an anion is first doped into the nickel-rich ternary positive electrode material precursor to prepare the positive electrode material B. In the process of preparing the positive electrode material B, the sintering temperature is 400°C to 650°C.

In some embodiments, the nickel-rich ternary positive electrode material precursor and the high-valence cation dopant are mixed and then placed in a ball mill tank for ball milling to obtain mixed powder a. Sintering the mixed powder a is beneficial to improve the sintering efficiency, so that the nickel-rich ternary positive electrode material precursor and the high-valence cation dopant are mixed more uniformly.

In some embodiments, the nickel-rich ternary positive electrode material precursor and a cathode dopant are mixed and then placed in a ball mill tank for ball milling to obtain mixed powder b. Sintering the mixed powder b is beneficial to improve the sintering effect, so that the nickel-rich ternary positive electrode material precursor and the anion dopant are mixed more uniformly.

Similarly, after the cathode material A doped with the high-valence cation is mixed with the anion dopant, or after the positive electrode material B doped with the anion is mixed with the high-valence cation dopant, the sintering speed can be increased by ball milling, so that the raw materials are mixed more uniformly.

Based on the preparation method for the positive electrode material C co-doped with the high-valence cation and the anion provided in the second aspect of the present application, a third aspect of the present application further provides a preparation method for a positive electrode material, comprising the following steps:
mixing the positive electrode material C as described above in the present application with a selenium-containing substance, heating same to obtain a positive electrode material, and marking the positive electrode material as a positive electrode material D, wherein a surface of the positive electrode material D has a selenium-containing substance coating layer.

It should be noted that the above preparation method can be understood as preparing a selenium-containing substance coating layer on the outer surface of the positive electrode material C, thereby forming the positive electrode material D.

In the present application, the selenium-containing substance coating layer is prepared on the surface of the positive electrode material C co-doped with the high-valence cation and the anion. The selenium-containing substance can undergo a redox reaction with residual lithium compounds (RLCs) on the surface of the nickel-rich positive electrode material to remove part of the RLCs and form a CEI (an electrolyte interface) such as lithium selenoselenate (Li₂Se₂O₃) and lithium selenate (Li₂SeO₄) in situ, which is beneficial to increase the migration rate of lithium ions on the surface layer. Meanwhile, the remaining selenium-containing substances can be combined with lattice oxygen released in the high delithiation state to prevent the electrolyte solution from being oxidized to produce gas, and the remaining RLCs can be further reacted and converted into active lithium for secondary use during the chemical formation process after a battery cell is manufactured.

Under the heating condition, the selenium-containing substance forms a molten state and uniformly diffuses on the surface of the positive electrode material C to form a dense coating layer. In some embodiments, the heating temperature is 230°C to 500°C. For example, the heating temperature may be any temperature value in the range of 230°C to 500°C, such as 230°C, 240°C, 250°C, 280°C, 300°C, 350°C, 400°C, 420°C, 450°C, 480°C, 500°C, etc. The above temperature condition enables the selenium-containing substance such as elemental selenium (Se), selenium oxide (SeO₂), selenium sulfide (SeS₂), tellurium selenide (TeSe) and the like to form a molten state, which is beneficial to wrap the co-doped positive electrode material and form a uniform selenium-containing substance coating layer on the surface thereof.

In some embodiments, the heating time is 15 min to 120 min. For example, the heating time may be any time value in the range of 15 min to 120 min, such as 15 min, 20 min, 50 min, 60 min, 80 min, 90 min, 100 min, 110 min, 120 min, etc. Under the above heating time condition, the selenium-containing substance can be formed into a molten state, and the co-doped positive electrode material can be wrapped to form a uniform selenium-containing substance coating layer on the surface thereof, and at the same time, other substances in the co-doped positive electrode material are not easily destroyed due to excessive heating time.

In some embodiments, performing heating in a tube furnace is beneficial to allow the selenium-containing substance and the positive electrode material C to be heated more uniformly, promote the melting of the selenium-containing substance, and form, on the surface of the positive electrode material C, a uniform first coating layer which is a selenium-containing substance coating layer.

In some embodiments, the heating step is performed under a protective atmosphere, such as an argon atmosphere, which is beneficial to accelerate the melting of the selenium-containing substance and prevent the air and the selenium-containing substance from reacting to generate other impurities, which could affect the performance of the selenium-containing substance coating layer.

Based on the preparation method for the positive electrode material D having a selenium-containing substance coating layer provided in the third aspect of the present application, a fourth aspect of the present application further provides another preparation method for a positive electrode material, comprising the following steps:
dissolving a conductive polymer in an organic solvent to obtain a conductive polymer solution, mixing and reacting the conductive polymer solution, an initiator and the positive electrode material D described above in the present application, filtering, washing and drying same to obtain a positive electrode material, and marking the positive electrode material as a positive electrode material E, wherein a surface of the positive electrode material E has a conductive substance coating layer.

It should be noted that the above preparation method can be understood as preparing a conductive substance coating layer on the outer surface of the selenium-containing substance coating layer of the positive electrode material D, thereby forming the positive electrode material E which contains both the selenium-containing substance coating layer and the conductive substance coating layer.

Since the selenium-containing substance easily catalyzes the decomposition of an electrolyte solution ester solvent to generate oxidizing gases, coating an outermost layer of the positive electrode material with a conductive polymer can prevent direct contact between the selenium-containing substance and the electrolyte solution and inhibit side reactions. Meanwhile, the excellent conductivity of the conductive polymer can enhance the electronic conductivity of the positive electrode material, reduce the interface impedance, and improve the cycling performance of the battery.

In some embodiments, based on 100% of the total mass of the positive electrode material D, the addition amount of the conductive polymer is 0.5% to 10%. For example, the addition amount may be any value in the range of 0.5% to 10%, such as 0.5%, 1%, 2%, 3%, 5%, 6%, 7%, 8%, 9%, 9.5%, 10%, etc. Within the above addition amount range, it is beneficial to completely wrap the positive electrode material of the selenium-containing substance coating layer to form a dense conductive polymer coating layer, isolate the direct contact between the selenium-containing substance and the electrolyte solution, inhibit side reactions, and simultaneously provide conductivity to enhance the electronic conductivity of the positive electrode material, reduce the interface impedance, and improve the cycling performance of the battery.

In some embodiments, the organic solvent comprises NMP (N-methylpyrrolidone). The above organic solvent can quickly dissolve the conductive polymer uniformly.

In some embodiments, the initiator comprises hydrogen peroxide, ammonium persulfate, potassium persulfate, and azobisisobutyronitrile.

In some embodiments, the reaction between the conductive polymer and the positive electrode material D is performed under a protective atmosphere such as a nitrogen atmosphere.

In some embodiments, referring to FIG. 1, the positive electrode material comprises an active substance 1, a selenium-containing substance coating layer 2 wrapping the active substance1, and an outermost conductive substance coating layer 3. The active substance 1 is a nickel-rich ternary positive electrode material doped with a high-valence cation and an anion, that is, the positive electrode material C described above in the present application. The nickel-rich ternary positive electrode material has the following chemical formula: LiₐNiₓCo_{y}Mn_{1-x-y}M₈O_{2-c}Q_{c}, wherein 0.2≤a≤1.2, x≥0.6, y>0, b>0, c>0, M comprises a high-valence cation, Q comprises an anion, and the high-valence cation comprises a tetravalent or higher cation.

The positive electrode material of this embodiment utilizes the high-valence cation to affect the crystal growth direction, leading to grain refinement, eliminate harmful stresses caused by H2-H3 phase transition lattice contraction through fracture toughening, and eliminate local compositional inhomogeneity of the positive electrode material. Moreover, the doped high-valence cation can also play a pillar effect to stabilize the stability of the delithiation structure. The doped anion can replace an oxygen site, enhance a metal-oxygen bond, inhibit lattice oxygen evolution, and at the same time reduce the interaction force between a lithium layer and an oxygen layer to increase the spacing between the lithium layer and the oxygen layer, reduce the migration barrier of lithium ions, and accelerate the transmission of lithium ions. In the present application, by combining bulk phase doping of the high-valence cation and surface gradient doping of the anion, the bulk structure of the nickel-rich positive electrode material under lithium deintercalation and the interface stability with the electrolyte solution are stabilized, side reactions, lattice oxygen evolution and transition metal dissolution are reduced, and the cycling stability, the high-temperature storage performance and the rate capability are improved.

In addition, the selenium-containing substance in the selenium-containing substance coating layer 2 of the positive electrode material of this embodiment can react with residual lithium compounds (RLCs) on the surface of the nickel-rich positive electrode material to form a CEI such as lithium selenoselenate (Li₂Se₂O₃) and lithium selenate (Li₂SeO₄) in situ, which increases the migration rate of lithium ions on the surface layer. Meanwhile, the remaining selenium-containing substances can be combined with lattice oxygen released in the high delithiation state to prevent the electrolyte solution from being oxidized to generate gas. Further, the conductive substance coating layer 3 on an outermost layer of the positive electrode material can prevent direct contact between the selenium-containing substance and the electrolyte solution and inhibit side reactions. Meanwhile, the excellent conductivity of the conductive polymer can enhance the electronic conductivity of the positive electrode material, reduce the interface impedance, and improve the cycling performing of the battery.

A fifth aspect of the present application provides a lithium-ion battery, the lithium-ion battery comprising the positive electrode material as described above in the present application, namely, comprising the positive electrode material C co-doped with a high-valence cation and an anion, the positive electrode material D containing a selenium-containing substance coating layer on this basis, and the positive electrode material E further containing a conductive polymer coating layer.

In some embodiments, the above lithium-ion battery comprise any one of a battery cell, a battery module and a battery pack.

A sixth aspect of the present application provides an electric device, the electric device comprising the lithium-ion battery as described above in the present application. The electric device of the present application has at least all the beneficial effects of the lithium-ion battery described above, which will not be repeated here.

The technical solution of the present application is further described in detail below in conjunction with specific embodiments. It should be understood that the following specific embodiments are merely used to explain the present application, and are not intended to limit the present application.

### Embodiment 1 to Embodiment 20

### 1. Modification of a positive electrode active material

S1: mixing a nickel-rich ternary positive electrode material NCM with a high-valence cation dopant according to Table 1, adding same to a ball mill tank for ball milling to obtain mixed powder a, placing the mixed powder a in an alumina crucible, performing primary sintering at 350°C to 500°C for 2 to 7h, and then performing secondary sintering at 600°C to 800°C for 3 to 6h to obtain a positive electrode material A, wherein the doping amount of the high-valence cation was 0.1% of the total molar mass of the nickel-rich ternary positive electrode material NCM.

S2: mixing the positive electrode material A with a cathode dopant according to Table 1, adding same to a ball mill tank for ball milling and mixing to obtain mixed powder b, and sintering the mixed powder b at 400°C to 650°C to obtain a positive electrode material C co-doped with the high-valence cation and the anion, wherein the doping amount of the anion was 0.5% of the total molar mass of the nickel-rich ternary positive electrode material NCM.

S3: mixing the positive electrode material C with a selenium-containing substance with a particle size Dv50 of 100 nm to 1000 nm according to Table 1, adding same to a ball mill tank for ball milling to obtain mixed powder c, placing the mixed powder c in the alumina crucible, putting the alumina crucible in a tube furnace, and heating the mixed powder c to 230°C to 500°C under an argon atmosphere for 15 min to 120 min, so that the selenium-containing substance became a molten state and uniformly diffused on the surface of the positive electrode material C to form a dense coating layer, thereby obtaining a positive electrode material D having a first coating layer, i.e., a selenium-containing substance coating layer on the surface, wherein the content (wt%) of the first coating layer in Table 1 referred to the addition amount of the selenium-containing substance based on 100% of the total mass of the positive electrode material C.

S4, dissolving a conductive polymer in N-methylpyrrolidone to obtain a conductive polymer solution, mixing and reacting the positive electrode material D, the conductive polymer solution and an initiator hydrogen peroxide, filtering and washing same to obtain a positive electrode material E having a second coating layer, i.e., a conductive substance coating layer with a thickness of 50 nm to 500 nm, wherein the content (wt%) of the second coating layer in Table 1 referred to the addition amount of the conductive polymer based on 100% of the total mass of the positive electrode material D.

The above positive electrode material E was a modified positive electrode material which was co-doped with a high-valence cation and an anion and had a selenium-containing substance coating layer and a conductive substance coating layer. Referring to FIG. 1, the modified positive electrode material contained an active substance 1, a selenium-containing substance coating layer 2, and a conductive substance coating layer 3, wherein the active substance 1 was a nickel-rich ternary positive electrode material doped with the high-valence cation and the anion.

### 2. Preparation of a lithium-ion battery

### 1) Positive electrode plate

The modified positive electrode active material (a nickel-cobalt-manganese ternary positive electrode material NCM), a conductive agent (acetylene black), and a binder (polyvinylidene fluoride (PVDF)) were dissolved in a solvent (N-methylpyrrolidone (NMP)) at a weight ratio of 96.5:1.5:2, and were sufficiently stirred and uniformly mixed to obtain a positive electrode slurry; and then the positive electrode slurry was uniformly coated onto a positive electrode current collector with a primer, followed by drying, cold pressing, and slitting to obtain a positive electrode plate.

### 2) Negative electrode plate

Active substances (graphite and silicon), a conductive agent (acetylene black), a high-molecular polymer and a thickener (sodium carboxymethyl cellulose (CMC)) were dissolved in a solvent (deionized water) at a weight ratio of 90:5:2:2:1, and were uniformly mixed with the solvent (deionized water) to prepare a negative electrode slurry, and coating a copper foil with the slurry, drying same, and then performing cold pressing and slitting to obtain an anode platet.

### 3) Separator

The separator was a PE separator with PVDF and an aluminium oxide coating coated on the surface to improve adhesion and heat resistance.

### 4) Electrolyte solution

Ethylene carbonate (EC), ethyl methyl carbonate (EMC) and diethyl carbonate (DEC) were mixed at a volume ratio of 1:1, and then LiPF6:LiFSI (2:8) was dissolved uniformly in the above solution to obtain an electrolyte solution. The concentration of lithium salt in the electrolyte solution was 1 mol/L.

### 5) Battery Assembly

The positive electrode plate, the separator, and the negative electrode plate were stacked in order, where the separator was located between the positive and negative electrode plates to play a separating role, and the positive electrode plate, the separator, and the negative electrode plate were wound to obtain a bare cell, a tab was welded to the bare cell, and the bare cell was enclosed in an aluminum case and baked at 80 °C to remove water, and then the electrolyte solution was injected and the aluminum case was sealed to obtain an uncharged battery. The uncharged battery was further subjected to processes such as standing, hot and cold pressing, chemical forming, shaping, and capacity testing in order to obtain a lithium-ion battery product.

### Embodiment 21

In Embodiment 21, referring to step S1 and step S2 in Embodiment 1, a modified nickel-rich ternary positive electrode material C doped with a high-valence cation and an anion was prepared. Then, a lithium-ion battery was prepared with reference to the steps of preparing the lithium-ion battery in Embodiment 1.

### Embodiment 22

In Embodiment 22, referring to steps S1 to S3 of Embodiment 1, a modified nickel-rich ternary positive electrode material D doped with a high-valence cation and an anion and having a first coating layer (i.e., a selenium-containing substance coating layer) was prepared. Then, a lithium-ion battery was prepared with reference to the steps of preparing the lithium-ion battery in Embodiment 1.

### Comparative Example 1

The positive electrode material in the lithium-ion battery of Comparative Example 1 selected an unmodified nickel-rich ternary positive electrode material NCM in Embodiment 1, and reference was made to Embodiment 1 for others.

### Comparative Example 2

Reference was made to Embodiment 1 for the positive electrode material in the lithium-ion battery of Comparative Example 2, and the difference was that in Comparative Example 2, a first coating layer, i.e., a selenium-containing substance coating layer was prepared with reference to only step S3 of Embodiment 1, without doping a high-valence cation and an anion, and without preparing a second coating layer, i.e., a conductive substance coating layer.

### Performance tests:

The 0.33C capacity retention rate (100 cycles), the capacity retention ratio (%) after 100 days of storage at 60°C and 100% SOC, and the number of days (day) for gas production to reach 0.4 Mpa at 60°C and 100% SOC for the lithium-ion batteries obtained in the Embodiments and Comparative Examples were measured.

**↗Table 1: Parameter Results in Embodiments 1-22 and Comparative Examples 1-2**

| No. | high-valence cation doped | anion doped | type of the first coating layer | content (wt%) of the first coating layer | type of the second coating layer | content (wt%) of the second coating layer | 0.33C capacity retention rate (100 cycles) | capacity retention rate after 100 days of storage at 60°C and 100% SOC | number of days for gas production to reach 0.4 Mpa at 60°C and 100% SOC |
|---|---|---|---|---|---|---|---|---|---|
| Embodiment 1 | Mo⁶⁺ | S²⁻ | selenium | 1 | polyaniline | 2 | 98.4% | 94.4% | 300 |
| Embodiment 2 | Mo⁶⁺ | S²⁻ | selenium dioxide | 1 | polyaniline | 2 | 98.1% | 94.1% | 295 |
| Embodiment 3 | Mo⁶⁺ | S²⁻ | selenium disulfide | 1 | polyaniline | 2 | 98.2% | 94.2% | 290 |
| Embodiment 4 | Mo⁶⁺ | S²⁻ | tellurium selenide | 1 | polyaniline | 2 | 98.0% | 94.0% | 290 |
| Embodiment 5 | Mo⁶⁺ | S²⁻ | selenium | 1 | polypyrrole | 2 | 98.1% | 94.1% | 297 |
| Embodiment 6 | Mo⁶⁺ | S²⁻ | selenium | 1 | polypyridine | 2 | 98.1% | 94.0% | 298 |
| Embodiment 7 | Mo⁶⁺ | S²⁻ | selenium | 1 | polythiophene | 2 | 98.0% | 94.0% | 296 |
| Embodiment 8 | Sb⁵⁺ | S²⁻ | selenium | 1 | polyaniline | 2 | 98.2% | 94.1% | 295 |
| Embodiment 9 | Zr⁴⁺ | S²⁻ | selenium | 1 | polyaniline | 2 | 98.1% | 94.0% | 296 |
| Embodiment 10 | Ti⁴⁺ | S²⁻ | selenium | 1 | polyaniline | 2 | 98.0% | 93.9% | 293 |
| Embodiment 11 | Nb⁵⁺ | S²⁻ | selenium | 1 | polyaniline | 2 | 98.0% | 94.0% | 292 |
| Embodiment 12 | W⁶⁺ | S²⁻ | selenium | 1 | polyaniline | 2 | 98.1% | 94.0% | 291 |
| Embodiment 13 | Y⁵⁺ | S²⁻ | selenium | 1 | polyaniline | 2 | 98.1% | 94.1% | 292 |
| Embodiment 14 | Mo⁶⁺ | Se²⁻ | selenium | 1 | polyaniline | 0.5 | 98.2% | 94.1% | 294 |
| Embodiment 15 | Mo⁶⁺ | Te²⁻ | selenium | 1 | polyaniline | 2 | 98.0% | 94.0% | 290 |
| Embodiment 16 | Mo⁶⁺ | P³⁻ | selenium | 1 | polyaniline | 2 | 98.0% | 94.1% | 285 |
| Embodiment 17 | Mo⁶⁺ | S²⁻ | selenium | 0.1 | polyaniline | 10 | 96.5% | 92.5% | 220 |
| Embodiment 18 | Mo⁶⁺ | S²⁻ | selenium | 0.5 | polyaniline | 2 | 97.5% | 93.5% | 250 |
| Embodiment 19 | Mo⁶⁺ | S²⁻ | selenium | 2 | polyaniline | 2 | 98.0% | 94.1% | 280 |
| Embodiment 20 | Mo⁶⁺ | S²⁻ | selenium | 5 | polyaniline | 2 | 97.8% | 93.9% | 270 |
| Embodiment 21 | Mo⁶⁺ | S²⁻ | / | / | / | / | 95.6% | 91.5% | 240 |
| Embodiment 22 | Mo⁶⁺ | S²⁻ | selenium | 1 | / | / | 96.2% | 92.0% | 245 |
| Comparative Example 1 | / | / | / | / | / | / | 94.0% | 91.0% | 150 |
| Comparative Example 2 | / | / | selenium | 1 | / | / | 95.0% | 92.0% | 190 |

It can be known from Table 1 that in the present application, by combining bulk phase doping of the high-valence cation and surface gradient doping of the anion, the bulk structure of the nickel-rich positive electrode material under lithium deintercalation and the interface stability with the electrolyte solution are stabilized, and side reactions, lattice oxygen evolution and transition metal dissolution are reduced, thereby improving the cycling stability, the high-temperature storage performance and the rate capability of the lithium-ion battery. In addition, by preparing a selenium-containing substance coating layer and a conductive substance coating layer on the outer surface of the positive electrode material and removing part of the RLCs, excessive RLCs content can be prevented from affecting the interface stability of the lithium-ion battery, which could lead to a series of side effects such as first effect, deterioration of cycling and poor storage performance; also, the conductive substance coating layer can prevent direct contact between the selenium-containing substance and the electrolyte solution and inhibit side reactions. Meanwhile, the excellent conductivity of the conductive polymer can enhance the electronic conductivity of the positive electrode material, reduce the interface impedance, and improve the cycling performance of the battery. Therefore, the 0.33C capacity retention rate (100 cycles) for the lithium-ion battery prepared in Embodiments 1 to 22 was above 96.5%, the capacity retention rate after 100 days of storage at 60°C and 100% SOC was above 91.5%, and the number of days for gas production to reach 0.4 Mpa at 60°C and 100% SOC was more than 220 days.

In Comparative Example 1, nopositive electrode material was modified, and the lithium-ion battery had a poor capacity retention rate and stability.

The positive electrode material in Comparative Example 2 was only prepared with a selenium-containing substance coating layer, without being doped with a high-valence cation and an anion, and without being prepared with a conductive substance coating layer, and the lithium-ion battery had also experienced a decline in the capacity retention rate and stability.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the embodiments without departing from the subject matter of the present application, and other embodiments constructed by combining some of the constituent elements in the embodiments are also included in the scope of the present application.

## Claims

1. A positive electrode material, the positive electrode material having the following chemical formula: LiₐNiₓCo_{y}Mn_{1-x-y}M_{b}O_{2-c}Q_{c}, wherein 0.2≤a≤1.2, x≥0.6, y>0, b>0, c>0, M comprises a high-valence cation, Q comprises an anion, the high-valence cation comprises a tetravalent or higher cation, and the anion comprises at least one of S²⁻, Se²⁻, Te²⁻ and P³⁻.

2. The positive electrode material according to claim 1, wherein the high-valence cation comprises at least one of Mo⁶⁺, Sb⁵⁺, Zr⁴⁺, Ti⁴⁺, Nb⁵⁺, W⁶⁺, Y⁵⁺ and Ta⁵⁺.

3. The positive electrode material according to claim 1 or 2, wherein 0.0005≤b≤0.01, and/or 0.001≤c≤0.1.

4. The positive electrode material according to any one of claims 1-3, wherein an outer surface of the positive electrode material further comprises a first coating layer which comprises a selenium-containing substance.

5. The positive electrode material according to claim 4, wherein the selenium-containing substance comprises at least one of elemental selenium (Se), selenium oxide (SeO₂), selenium sulfide (SeS₂) and tellurium selenide (TeSe).

6. The positive electrode material according to claim 4 or 5, wherein the content of selenium element in the positive electrode material containing the first coating layer is 0.03% to 5%.

7. The positive electrode material according to any one of claims 4-6, wherein based on 100% of the total mass of the positive electrode material, the addition amount of the selenium-containing substance ranges from 0.1% to 5%.

8. The positive electrode material according to claim 7, wherein based on 100% of the total mass of the positive electrode material, the addition amount of the selenium-containing substance ranges from 0.5% to 2%.

9. The positive electrode material according to any one of claims 4-8, wherein the particle size Dv50 of the selenium-containing substance is 100 nm to 1000 nm.

10. The positive electrode material according to any one of claims 4-9, wherein the particle size Dv50 of the selenium-containing substance is 100 nm to 500 nm.

11. The positive electrode material according to any one of claims 4-10, wherein the positive electrode material further comprises a second coating layer which is coated on a surface of the first coating layer and comprises a conductive polymer.

12. The positive electrode material according to claim 11, wherein the conductive polymer comprises at least one of polyaniline, polypyrrole, polypyridine and polythiophene.

13. The positive electrode material according to claim 11 or 12, wherein the second coating layer has a thickness of 50 nm to 500 nm.

14. The positive electrode material according to claim 13, wherein the second coating layer has a thickness of 50 nm to 200 nm.

15. A preparation method for the positive electrode material according to any one of claims 1-3,
the preparation method for the positive electrode material comprising the following steps:
mixing a nickel-rich ternary positive electrode material precursor with a high-valence cation dopant, sintering same to obtain a high-valence cation-doped positive electrode material A, mixing the positive electrode material A with an anion dopant, sintering same to obtain the positive electrode material, and marking the positive electrode material as a positive electrode material C, wherein the positive electrode material C contains a high-valence cation and an anion, and the high-valence cation comprises a tetravalent or higher cation;
or
the preparation method for the positive electrode material comprising the following steps:
mixing a nickel-containing positive electrode material precursor with an anion dopant, sintering same to obtain an anion-doped positive electrode material B, mixing the positive electrode material B with a high-valence cation dopant, sintering same to obtain the positive electrode material, and marking the positive electrode material as a positive electrode material C, wherein the positive electrode material C contains a high-valence cation and an anion, and the high-valence cation comprises a tetravalent or higher cation.

16. The preparation method for the positive electrode material according to claim 15, wherein in the step of preparing the positive electrode material A, the sintering comprises primary sintering and secondary sintering, the temperature of the primary sintering is 350 to 500°C, the time of the primary sintering is 2 to 7h, the temperature of the secondary sintering is 600 to 800°C, and the time of the secondary sintering is 3 to 6h.

17. The preparation method for the positive electrode material according to claim 15 or 16, wherein in the step of preparing the positive electrode material B, the temperature of the sintering is 400°C to 650°C.

18. A preparation method for a positive electrode material, comprising the following steps:
mixing the positive electrode material C prepared by the preparation method according to any one of claims 15-17 with a selenium-containing substance, heating same to obtain a positive electrode material, and marking the positive electrode material as a positive electrode material D, wherein a surface of the positive electrode material D has a selenium-containing substance coating layer.

19. The preparation method for the positive electrode material according to claim 18, wherein the heating temperature is 230°C to 500°C;
and/or, the heating time is 15 min to 120 min.

20. A preparation method for a positive electrode material, comprising the following steps:
dissolving a conductive polymer in an organic solvent to obtain a conductive polymer solution, mixing and reacting the conductive polymer solution, an initiator and the positive electrode material D prepared by the preparation method according to claim 18 or 19, filtering, washing and drying same to obtain a positive electrode material, and marking the positive electrode material as a positive electrode material E, wherein a surface of the positive electrode material E has a conductive substance coating layer.

21. The preparation method for the positive electrode material according to claim 20, wherein based on 100% of the total mass of the positive electrode material D, the addition amount of the conductive polymer is 0.5% to 10%.

22. A lithium-ion battery, the lithium-ion battery comprising the positive electrode material according to any one of claims 1-14.

23. An electrical device, the electric device comprising the lithium-ion battery according to claim 22.
